# EUROPÄISCHE PATENTANMELDUNG

(11) **EP 1 688 119 A1**
(43) Veröffentlichungstag der Anmeldung: **09.08.2006**
(21) Anmeldenummer: 05020407.2
(22) Anmeldetag: 19.09.2005
(51) Int. Cl.: A61H 1/00, A61H 23/02, A47C 21/00, B60N 2/44

(54) **Sitz- oder Liegemöbel mit Vibrationseinrichtung zur Verbesserung der Durchblutung**

(30) Priorität: 02.02.2005 EP 05002115
(71) Anmelder: IBFK GmbH International Biotechnological Future Knowledge, 47804 Krefeld (DE)
(72) Erfinder: Katsuta, Jiro, 47804 Krefeld (DE)
(74) Vertreter: Paul, Dieter-Alfred

(57) **Zusammenfassung**

Sitz- oder Liegemöbel mit wenigstens einer Vibrationseinrichtung zur Verbesserung der Durchblutung bei sitzenden oder liegenden Personen, wobei in Bereiche des Körpers der sitzenden oder liegenden Person, in denen Durchblutungsstörungen zu befürchten sind, lokal durch die wenigstens eine unterhalb der Sitz- oder Liegefläche angeordnete Vibrationseinrichtung (5) Schwingungen mit einer festgelegten oder festlegbaren Frequenz im Bereich von 5 bis 30 Hz eingekoppelt werden.

## Beschreibung

Die vorliegende Erfindung betrifft ein Verfahren zur Ver-besserung der Durchblutung bei sitzenden oder liegenden Personen. Desweiteren betrifft die Erfindung Sitz- und Liegemöbel zur Durchführung dieses Verfahrens.

Auf längeren Reisen mit dem Auto, dem Bus oder dem Flugzeug tritt sehr häufig das Problem auf, daß die Beine nur unzureichend durchblutet werden und es zu sogenannten Blutstasen kommt. Die Ursache hierfür liegt darin, daß bei einer sitzenden Person nahezu das gesamte Körpergewicht auf den Oberschenkeln lastet mit der Folge, daß das Hautgewebe und die Gefäße in den Oberschenkelbereichen, die mit dem Fahrzeugsitz in Kontakt kommen, einem hohen Druck ausgesetzt sind, der eine weitere Blutzirkulation unterbindet. Als Resultat stellt sich ein Taubheitsgefühl in den Beinen ein, und es besteht bei längeren Flugreisen sogar das Risiko von Embolien.

Ein ähnliches Problem tritt auch bei bettlägerigen Personen auf. Als Folge langen Liegens können sich an den typischen Auflagebereichen, d.h. an den Schulterblättern, dem Becken sowie den Fersen wunde Stellen bilden (Dekubitus). Aus diesem Grund werden bettlägerige Patienten in Krankenhäusern regelmäßig umgebettet. Hierdurch kann jedoch längerfristig die vorbeschriebene Problematik nicht behoben werden.

Es ist daher die Aufgabe der vorliegenden Erfindung, ein Verfahren bereitzustellen, mit dem die Durchblutung bei sitzenden oder liegenden Personen angeregt werden kann. Desweiteren sollten Sitz- und Liegemöbel zur Durchführung des Verfahrens angegeben werden.

Diese Aufgabe ist erfindungsgemäß dadurch gelöst, daß in Bereiche des Körpers der sitzenden oder liegenden Person, in denen Durchblutungsstörungen zu befürchten sind, lokal durch wenigstens eine unterhalb der Sitz- oder Liegefläche angeordnete Vibrationseinrichtung Schwingungen mit einer festgelegten oder festlegbaren Frequenz in einem Frequenzbereich von 20 bis 30 Hz eingekoppelt werden. Der Erfindung liegt damit die Überlegung zugrunde, gezielt in diejenigen Auflagebereiche einer sitzenden oder liegenden Person, in denen die größten Druckkräfte auftreten und damit die Gefahr von Durchblutungsstörungen und im schlimmsten Fall von Blutstasen besteht, Schwingungen mit einer definierten Frequenz, die mit einer gewünschten Frequenz und Amplitude einzukoppeln. Die Schwingungen in dem niedrigen Frequenzbereich haben dabei zur Folge, daß der Körper in den Auflagebereichen abwechselnd angehoben und abgesenkt wird, wobei während der Absenkbewegung eine kurzzeitige Druckentlastung auftritt, so daß eine Blutzirkulation stattfinden kann. Des weiteren bewirken die Vibrationen eine Art Pumpeffekt, der die Blutzirkulation anregt.

Versuche haben gezeigt, daß eine gute Wirkung erzielt wird, wenn die Schwingungen in einem bevorzugten Frequenzbereich 20 bis 30 Hz liegen und eine Amplitude von 0,5 bis 2 mm und insbesondere 1 bis 2 mm besitzen.

In bevorzugter Weise werden die Schwingungen zyklisch erzeugt, da ein dauerhaftes Vibrieren als unangenehm empfunden wird. Es hat sich gezeigt, daß die Einleitung von Schwingungen in mehreren Zyklen, die jeweils weniger als eine Minute, beispielsweise ca. 30 Sekunden betragen können, völlig ausreichend sind. Wenn mehrere Schwingungszyklen nacheinander durchgeführt werden, ist es zweckmäßig, zunächst mit einer geringeren Schwingungsintensität zu beginnen und dann die Intensität von Zyklus zu Zyklus zu steigern. Auf diese Weise wird vermieden, daß sich beispielsweise ein Autofahrer beim Einsetzen der Vibrationen erschreckt.

Wie bereits eingangs erwähnt sind im Falle einer sitzenden Person die auf der Sitzfläche ruhenden Oberschenkel besonders hohen Druckkräften ausgesetzt, so daß hier in erster Linie die Gefahr von Blutstasen besteht. Entsprechend ist bei einem Sitzmöbel gemäß der vorliegenden Erfindung die oben bestehende Aufgabe dadurch gelöst, daß in dem Sitzkörper unterhalb der Oberschenkelauflagebereiche der Sitzfläche zwei Vibrationseinrichtungen vorgesehen sind, um Schwingungen in die Oberschenkel einer auf dem Sitzmöbel sitzenden Person einzukoppeln.

Bei einem Liegemöbel gemäß der vorliegenden Erfindung ist die Aufgabe dadurch gelöst, daß in dem Grundkörper unterhalb des Kopfauflagebereichs und/oder der Schulterauflagebereiche und/oder des Beckenauflagebereichs und/oder der Fersenauflagebereiche der Liegefläche jeweils wenigstens eine Vibrationseinrichtung angeordnet ist, um in den Kopf und/oder die Schultern und/oder das Becken und/oder die Fersen einer auf dem Liegemöbel liegenden Person Schwingungen einzukoppeln.

Gemäß einer Ausführungsform der vorliegenden Erfindung ist vorgesehen, daß die Vibrationseinrichtungen jeweils eine Schwingungsplatte aufweisen, die mittels eines Schwingungserzeugers in Schwingungen versetzt werden kann. In dem Fall eines Sitzmöbels sind dabei die Vibrationsplatten etwa V-förmig und zur Sitzvorderseite hin divergierend ausgebildet, so daß die Oberschenkel einer sitzenden Person flächig auf den Vibrationsplatten zum Liegen kommen.

Grundsätzlich ist es möglich, die beiden Vibrationsplatten über einen gemeinsamen Schwingungserzeuger anzuregen. In bevorzugter Weise ist den beiden Vibrationsplatten jeweils ein eigener Schwingungserzeuger zugeordnet, wobei die Schwingungserzeuger derart aufeinander abgestimmt sind, daß sie die Vibrationsplatten alternierend und gegensinnig anregen.

Versuche haben gezeigt, daß ein optimaler Effekt erzielt wird, wenn die Vibrationsplatten alternierend und gegensinnig bewegt werden. Grundsätzlich wäre es aber auch möglich, die Vibrationsplatten parallel zueinander und gleichphasig in Schwingungen zu versetzen.

Gemäß einer bevorzugten Ausführungsform weist die Vibrationseinrichtung ein Gehäuse oder einen Rahmen auf, an welchem die Vibrationsplatte gehalten und an ihrer von der Sitz- oder Liegefläche wegweisenden Seite abgestützt ist. Die Abstützung kann beispielsweise durch ein Hdrauliksystem erfolgen, wobei vorzugsweise die Abstützdrücke an den Abstützstellen unabhängig voneinander einstellbar sind, so daß die Vibrationsplatte durch entsprechende Beaufschlagung der einzelnen Abstützstellen angehoben, abgesenkt und gekippt werden kann mit der Folge, daß sich eine gewünschte Soll-Lage der Vibrationsplatte unabhängig von der Druckbelastung durch eine auf dem Möbel sitzenden oder liegenden Person einstellen läßt. Dabei erfolgt zweckmäßigerweise eine automatische Regelung des Hydrauliksystems dahingehend, daß die Vibrationsplatten eine vorgegebene Ausgangslage einnehmen, bevor sie in Schwingungen versetzt werden.

Um bei den vorbeschriebenen Sitz- und Liegemöbeln Schwingungen zu erzeugen, ist gemäß einem Ausführungsbeispiel vorgesehen, daß in dem eine Schwingungsmasse geführt ist, die mit der Vibrationsplatte gekoppelt ist und über Anregungsmittel in Schwingungen versetzt werden kann.

Zur Berücksichtigung variabler Parameter wie beispielsweise der Masse der das Möbel benutzenden Person können die Schwingungsmasse und die Vibrationsplatte derart miteinander gekoppelt sein, daß das Verhältnis ihrer Schwingungsamplituden zueinander einstellbar ist. Dadurch kann eine Anpassung der Amplitude der Zwischenmasse an das Gewicht der Person erfolgen. Beträgt das abzustützende Gewicht der Person beispielsweise 40 kg und das Gewicht der Zwischenmasse 8 kg, so ist nach dem Impulserhaltungssatz eine Kopplung wünschenswert, die ein Schwingungsverhältnis von Zwischenmasse zu Vibrationsplatte von 5:1 ermöglicht. Beispielsweise kann die Anregung der Schwingungsmasse und/oder die Kopplung der Schwingungsmasse mit der Vibrationsplatte über Tauchspulsysteme erfolgen.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt
- Figur 1: eine Schnittansicht eines erfindungsgemäßen Sitzmöbels mit einer darauf sitzenden Person,
- Figur 2: in vergrößerter Darstellung den Sitzkörper des Sitzmöbels aus Figur 1,
- Figur 3: den Sitzkörper aus Figur 2 in Draufsicht,
- Figur 4: die Vibrationseinrichtung des Sitzmöbels aus Figur 3 in Draufsicht,
- Figur 5: ein Diagramm, in welchem die zyklische Schwingungseinkopplung gemäß einem Verfahren der vorliegenden Erfindung dargestellt ist und
- Figur 6: ein Liegemöbel gemäß der vorliegenden Erfindung in schematischer Seitenansicht und Draufsicht.

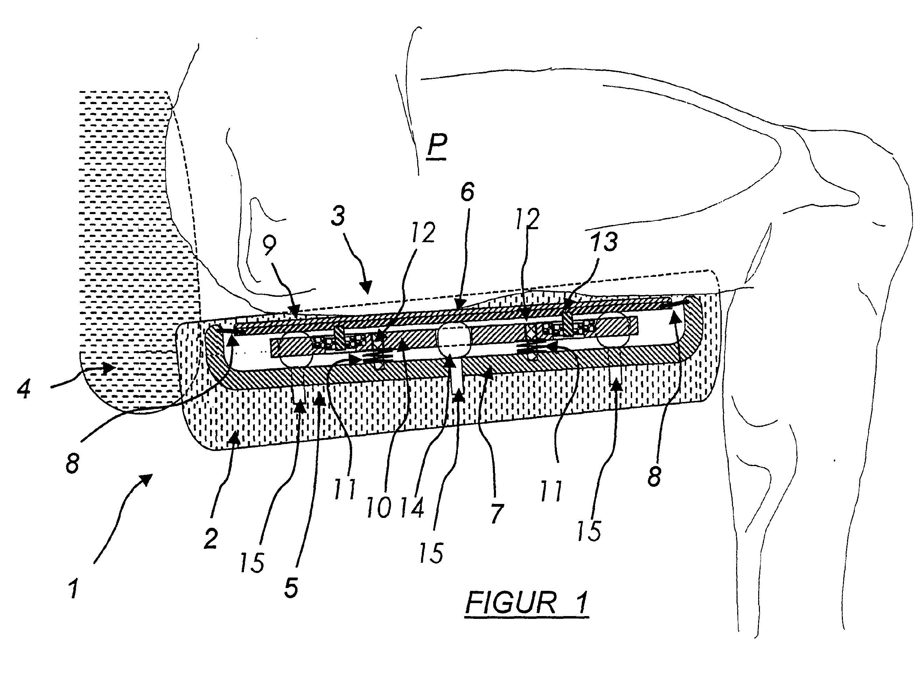

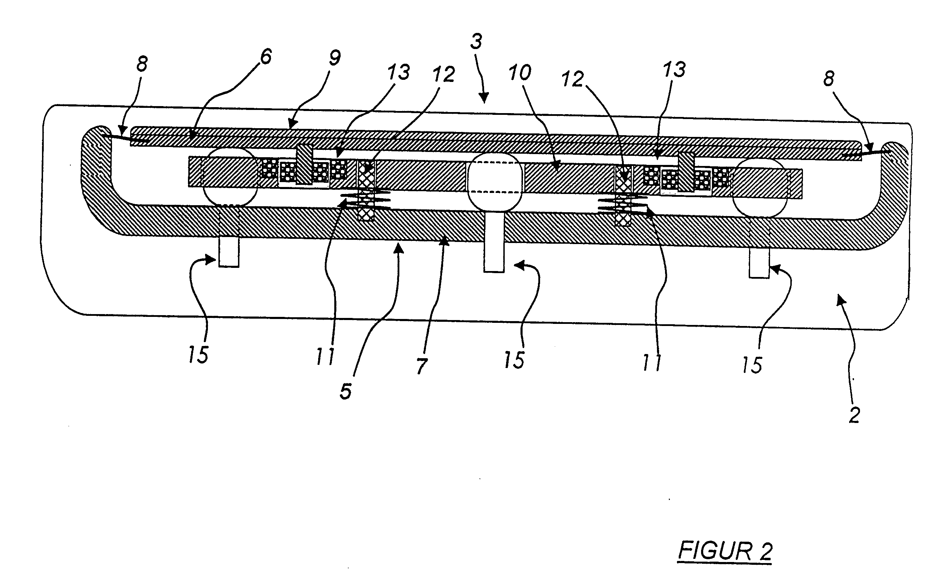

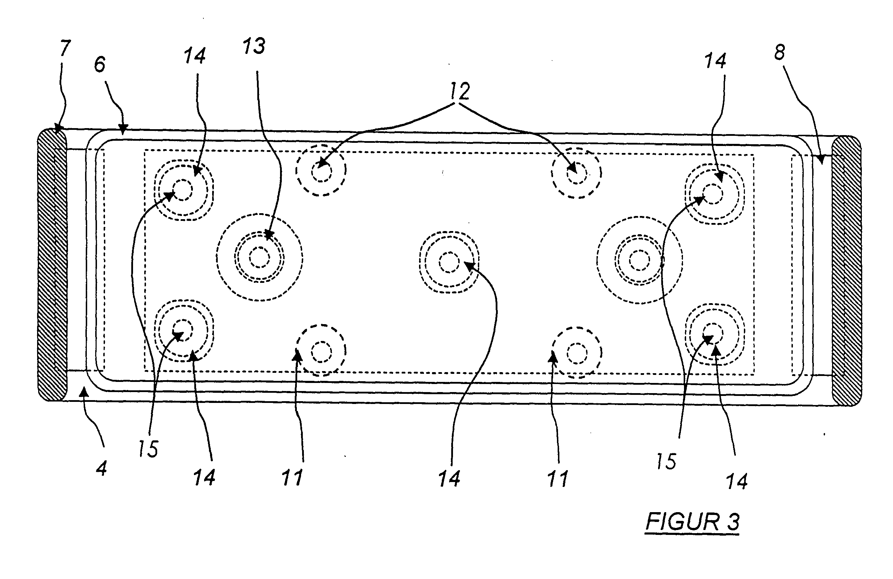

Die Figuren 1 bis 4 zeigen ein Sitzmöbel gemäß der vorliegenden Erfindung, das hier als Fahrzeugsitz 1 für einen PKW, ein Flugzeug o. dgl. verwendet werden kann. Der Fahrzeugsitz 1 besitzt einen Sitzkörper 2, der an seiner Oberseite eine Sitzfläche 3 aufweist, sowie eine Rückenlehne 4. In dem Sitzkörper 2 sind zwei Vibrationseinrichtungen 5 vorgesehen, die dazu dienen, Schwingungen in die Oberschenkel einer auf dem Sitz sitzenden Person P einzukoppeln. Die Vibrationseinrichtungen 5 besitzen jeweils eine längliche Vibrationsplatte 6, die an einem Rahmen oder Gehäuse 7 der Vibrationseinrichtung 5 über Blattfedern 8 aufgehängt ist und an ihrer zur Sitzfläche 3 weisenden Oberseite mit einer Gelauflage 9 versehen ist.

In dem Gehäuse 7 ist ein Schwingungserzeuger untergebracht, um die Vibrationsplatte 6 in Schwingungen zu versetzen. Dieser Schwingungserzeuger umfaßt eine Schwingungsasse 10, die an dem Gehäuse 7 über Federn 11 abgestützt und an Führungsstiften 12, welche die Federn 11 durchgreifen, quer zur Ebene der Vibrationsplatte 6, d.h. zu der Sitzfläche 3 hin und von dieser weg, bewegbar geführt ist. Die Schwingungsmasse 10 ist mit der Vibrationsplatte 6 über ein Tauchspulsystem 13 gekoppelt, welches bei Erregung die Vibrationsplatte 6 und die Schwingungsmasse 10 in Schwingungen versetzt, deren Frequenz und Amplitude über ein Steuergerät einstellbar sind.

Die Vibrationsplatte 6 ist zusätzlich in dem Gehäuse 7 an ihrer von der Sitzfläche 3 wegweisenden Unterseite abgestützt. Konkret erfolgt die Abstützung über fünf mit Hydraulikmitteln gefüllte Ballone 14, die in den vier Ekkenbereichen und im Zentrum der rechteckigen Vibrationsplatte 6 positioniert sind, um die Vibrationsplatte 6 gleichmäßig abzustützen. Die Ballone 14 sind über Stutzen 15 an ein Hydraulikmittelsystem angeschlossen, über welches ihnen je nach Bedarf Hydraulikflüssigkeit zugeführt oder entnommen werden kann. Da die auf die Vibrationsplatte 6 von der den Sitz benutzenden Person P ausgeübten Druck von der Sitzvorderseite zur Sitzrückseite hin ungleichmäßig verteilt sind, ist das Hydrauliksystem so ausgelegt, daß die Ballone 14 einzeln oder paarweise angesteuert werden können, um ihnen Hydraulikflüssigkeit zuzuführen oder zu entnehmen. In der Zeichnung nicht erkennbar ist, daß ein automatisches Regelsystem vorgesehen ist, welches die Position und Lage der Vibrationsplatte 6 erfaßt und den Ballonen 14 Hydraulikmittel in der Weise zuführt oder entnimmt, daß die Vibrationsplatte 6 eine gewünschte Solllage einnimmt. Auf diese Weise wird gewährleistet, daß die Vibrationsplatte 6 eine gewünschte Ausgangslage unabhängig von dem Gewicht und der Figur der Person P einnimmt. Das Regelsystem stellt auch sicher, daß die Position der Vibrationsplatte 6 nachjustiert wird, wenn die Person P ihre Sitzposition verändert.

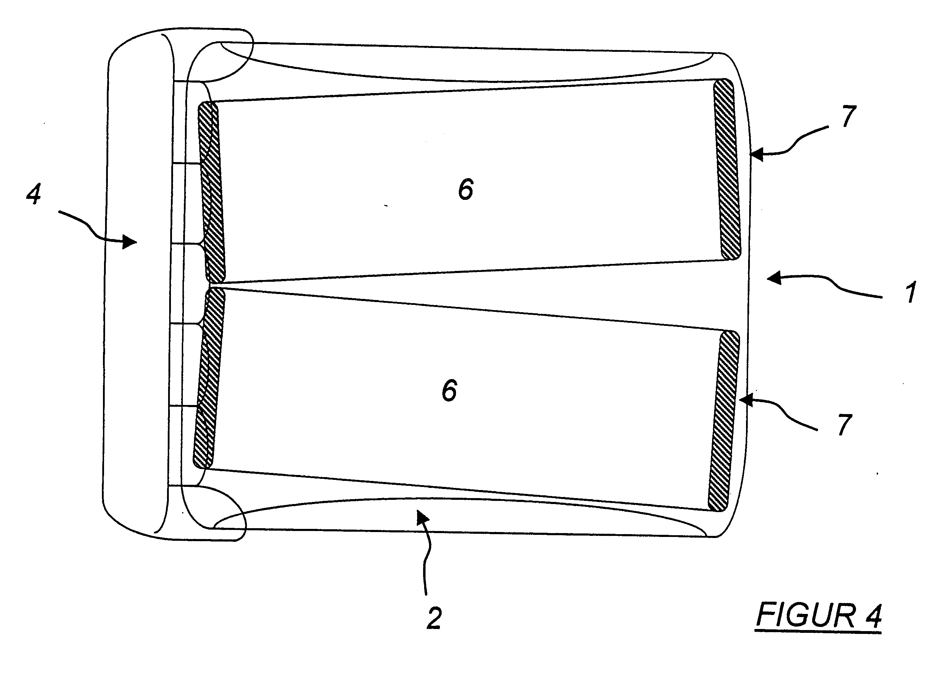

Die beiden Vibrationseinrichtungen 5 sind, wie insbesondere die Figur 4 gut erkennen läßt, leicht V-förmig derart angeordnet, daß die Vibrationsplatten 6 von der Rückseite zur Vorderseite des Sitzes 1 leicht auseinanderlaufen, so daß die Oberschenkel der Person P bei üblicher Sitzweise auf den Vibrationsplatten 6 positioniert sind.

Die Vibrationseinrichtungen 5 bilden zwar baulich separate Einheiten, ihre Schwingungserzeuger sind jedoch derart aufeinander abgestimmt, daß die Vibrationsplatten 6 bei einer Betätigung alternierend und gegensinnig angeregt werden, um Schwingungen mit einer definierten Frequenz über die Vibrationsplatten 6 in die Oberschenkel der auf dem Sitz 1 sitzenden Person P mit einer gewünschten Frequenz und Amplitude einzukoppeln. Die Schwingungen der Vibrationsplatte 6 haben dabei zur Folge, daß der Oberschenkel bei einer Aufwärtsbewegung der Vibrationsplatte 6 angehoben und bei der anschließenden Absenkbewegung der Vibrationsplatte 6 kurzzeitig druckentlastet wird, so daß eine Blutzirkulation stattfinden kann. Desweiteren bewirken die Vibrationen eine Art Pumpeffekt, der die Blutzirkulation anregt.

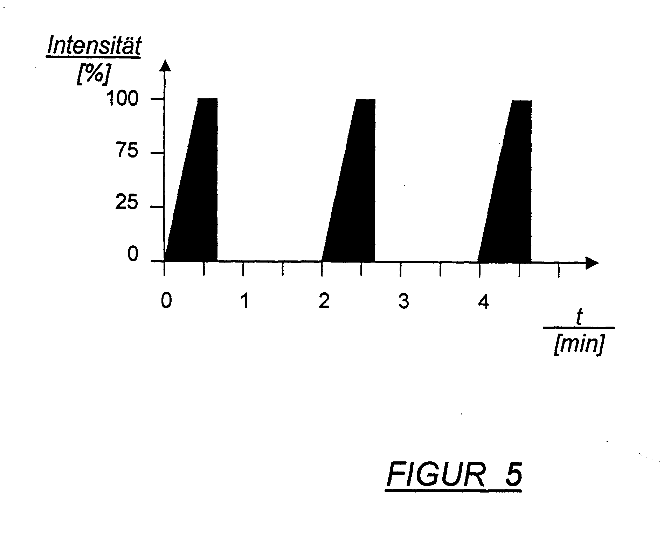

Wie die Figur 5 zeigt, erfolgt bei automatischem Betrieb die Einkopplung der Schwingungen in drei Applikationszyklen, die jeweils etwa 40 Sekunden dauern, wobei die Schwingungsintensität zu Beginn eines jeden Zyklus kontinuierlich auf einen vorgegebenen Sollwert gesteigert wird. In den dargestellten Ausführungsbeispielen ist die maximale Intensität in allen drei Applikationszyklen gleich. Es besteht jedoch auch die Möglichkeit, die Intensität von Zyklus zu Zyklus zu steigern. Selbstverständlich ist es auch möglich, die Vibrationseinrichtungen individuell von Hand einzustellen und zu schalten. Versuche haben gezeigt, daß gute Ergebnisse erzielt werden, wenn die Frequenz der Schwingungen, die vor Gebrauch durch einen Benutzer festgelegt wird und die während der Benutzung gleichbleibt, im Bereich von 5 bis 30 Hz und insbesondere 20 bis 30 Hz sowie mit einer Amplitude von 0,5 bis 2 mm, insbesondere von 1 bis 2 mm in den Körper eingekoppelt werden.

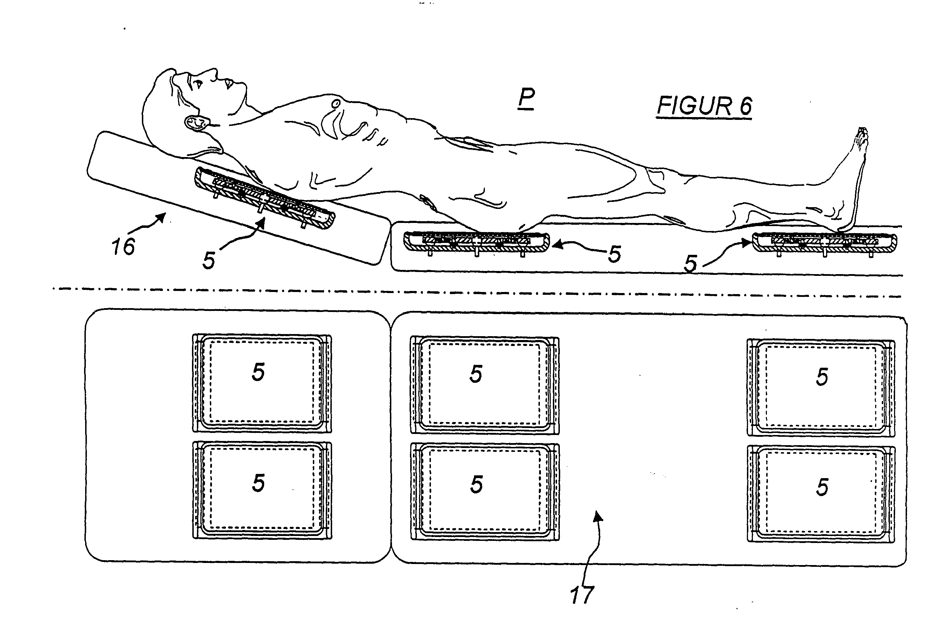

In der Figur 6 ist schließlich schematisch ein Liegemöbel 16 gemäß der vorliegenden Erfindung dargestellt. Wie bereits eingangs ausgeführt, sind bei einer liegenden Person P die Schulterblätter, das Gesäß und die Fersen besonders anfällig gegen Blutstasen und in der Folge Dekubitus. Entsprechend sind bei dem erfindungsgemäßen Liegemöbel 16 Vibrationseinrichtungen 5 an den entsprechenden Auflagebereichen in der Matratze 17 vorgesehen. Diese Vibrationseinrichtungen 5 haben den gleichen Aufbau die zuvor beschriebene und im Fahrzeugsitz 1 eingesetzte Vibrationseinrichtung 5, so daß auf die entsprechenden Ausführungen verwiesen werden darf.

Zu erwähnen ist, daß den Auflagebereichen jeweils zwei Vibrationseinrichtungen 5 paarweise zugeordnet sind, die wie die beiden Vibrationseinrichtungen 5 des Fahrzeugsitzes vorzugsweise alternierend und gegensinnig betätigt werden.

Schließlich ist es möglich, auch den Füßen Vibrationseinrichtungen zuzuordnen, die beispielsweise in den Fahrzeugboden integriert sein können.

## Patentansprüche

1. Verfahren zur Verbesserung der Durchblutung bei sitzenden oder liegenden Personen, **dadurch gekennzeichnet, daß** in Bereiche des Körpers der sitzenden oder liegenden Person, in denen Durchblutungsstörungen zu befürchten sind, lokal durch wenigstens eine unterhalb der Sitz- oder Liegefläche angeordnete Vibrationseinrichtung (5) Schwingungen mit einer festgelegten oder festlegbaren Frequenz im Bereich von 5 bis 30 Hz eingekoppelt werden.

2. Verfahren nach Anspruch 1 zur Verhinderung von Blutstasen bei einer sitzenden Person, **dadurch gekennzeichnet, daß** die Schwingungen in die Oberschenkel der Person eingekoppelt werden.

3. Verfahren nach Anspruch 2, **dadurch gekennzeichnet, daß** die Schwingungen in die Oberschenkel durch zwei gegenläufig betätigbare Vibrationsplatten, die alternierend in Schwingungen versetzt werden können, eingekoppelt werden.

4. Verfahren nach Anspruch 1, **dadurch gekennzeichnet, daß** in dem Fall einer liegenden Person die Schwingungen in den Kopf und/oder die Schultern und/oder das Becken und/oder die Fersen der Person eingekoppelt werden.

5. Verfahren nach einem der vorherigen Ansprüche, **dadurch gekennzeichnet, daß** die Schwingungen zyklisch erzeugt werden, wobei ein Schwingungszyklus bis zu einer Minute und insbesondere etwa dreißig Sekunden andauert.

6. Verfahren nach Anspruch 5, **dadurch gekennzeichnet, daß** mehrere Schwingungszyklen nacheinander durchgeführt werden, wobei die Schwingungsintensität von Zyklus zu Zyklus gesteigert wird.

7. Verfahren nach einem der vorherigen Ansprüche, **dadurch gekennzeichnet, daß** die Schwingungen mit einer Frequenz von 20 bis 30 Hz erzeugt werden.

8. Verfahren nach einem der vorherigen Ansprüche, **dadurch gekennzeichnet, daß** die Schwingungen eine Amplitude von 0,5 bis 2 mm, insbesondere 1 bis 2 mm besitzen.

9. Sitzmöbel, insbesondere für Fahrzeuge und Flugzeuge, mit einem Sitzkörper (2), der eine Sitzfläche (3) bildet, und gegebenenfalls einer Rückenlehne (4), **dadurch gekennzeichnet, daß** in dem Sitzkörper (2) unterhalb der Oberschenkelauflagebereiche der Sitzfläche (3) zwei Vibrationseinrichtungen (5) vorgesehen sind, welche bei Betätigung Schwingungen mit einer festgelegten oder festlegbaren Frequenz im Bereich von 5 bis 30 Hz in die Oberschenkel einer auf dem Sitzmöbel (1) sitzenden Person (P) einzukoppeln.

10. Sitzmöbel nach Anspruch 9, **dadurch gekennzeichnet, daß** die Vibrationseinrichtung (5) gegenläufig betätigbare Vibrationsplatten (6) aufweist, die mittels eines Schwingungserzeugers alternierend in Schwingungen versetzt werden können.

11. Sitzmöbel nach Anspruch 10, **dadurch gekennzeichnet, daß** die Vibrationsplatten (6) etwa V-förmig zur Sitzvorderseite auseinanderlaufend angeordnet sind.

12. Sitzmöbel nach Anspruch 10 oder 11, **dadurch gekennzeichnet, daß** den beiden Vibrationsplatten (6) jeweils ein Schwingungserzeuger zugeordnet ist, wobei die Schwingungserzeuger derart aufeinander abgestimmt sind, daß sie die Vibrationsplatten (6) alternierend und gegensinnig anregen.

13. Liegemöbel, insbesondere Bett mit einem Grundkörper, der eine Liegefläche bildet, **dadurch gekennzeichnet, daß** in dem Grundkörper (17) unterhalb des Kopfauflagebereichs und/oder der Schulterauflagebereiche und/oder des Beckenauflagebereichs und/oder der Fersenauflagebereiche der Liegefläche jeweils wenigstens eine Vibrationseinrichtung (5) angeordnet ist, welche bei Betätigung in den Kopf und/oder die Schultern und/oder das Becken und/oder die Fersen einer auf dem Liegemöbel liegenden Person Schwingungen mit einer festgelegten oder festlegbaren Frequenz im Bereich von 5 bis 30 Hz einkoppelt.

14. Liegemöbel nach Anspruch 13, **dadurch gekennzeichnet, daß** die Schwingungseinrichtung (5) eine Vibrationsplatte (6) aufweist, die mittels eines Schwingungserzeugers in Schwingungen versetzt werden kann.

15. Sitz- oder Liegemöbel nach einem der Ansprüche 10 bis 12 oder Anspruch 14, **dadurch gekennzeichnet, daß** die Vibrationsplatte (6) in einem Gehäuse (7) der Vibrationseinrichtung federnd aufgehängt ist.

16. Sitz- oder Liegemöbel nach Anspruch 15, **dadurch gekennzeichnet, daß** die Vibrationsplatte (6) an ihrer von der Sitz- oder Liegefläche wegweisenden Unterseite in dem Gehäuse (7) abgestützt ist.

17. Sitz- oder Liegemöbel nach Anspruch 16, **dadurch gekennzeichnet, daß** die Vibrationsplatte (6) an dem Gehäuse (7) hydraulisch abgestützt ist.

18. Sitz- oder Liegemöbel nach Anspruch 17, **dadurch gekennzeichnet, daß** die Vibrationsplatte (6) an mehreren Stellen hydraulisch abgestützt ist, wobei der Abstützdruck der Hydraulik an den Stützstellen (14) separat einstellbar ist.

19. Sitz- oder Liegemöbel nach einem der Ansprüche 14 bis 18, **dadurch gekennzeichnet, daß** an der zur Auflagefläche weisenden Seite der Vibrationsplatte (6) eine Gelauflage (9) vorgesehen ist.

20. Sitz- oder Liegemöbel nach einem der Ansprüche 15 bis 19, **dadurch gekennzeichnet, daß** in dem Gehäuse (7) der Vibrationseinrichtung (5) eine Schwingungsmasse (10) geführt ist, die mit der Vibrationsplatte (6) gekoppelt ist und über Anregungsmittel in Schwingungen versetzt werden kann.

21. Sitz- oder Liegemöbel nach Anspruch 20, **dadurch gekennzeichnet, daß** die Schwingungsmasse (10) und die Vibrationsplatte (6) derart miteinander gekoppelt sind, daß das Verhältnis ihrer Schwingungsamplituden zueinander einstellbar ist.

22. Sitz- oder Liegemöbel nach Anspruch 20 oder 21, **dadurch gekennzeichnet, daß** die Anregung der Schwingungsmasse (10) und/oder die Kopplung der Schwingungsmasse (10) mit der Vibrationsplatte (6) über Tauchspulsysteme erfolgt.
